# EUROPEAN PATENT SPECIFICATION

(11) **EP 4 399 890 B1**
(45) Date of publication and mention of the grant of the patent: **29.10.2025**
(21) Application number: 22776883.5
(22) Date of filing: 02.09.2022
(51) Int. Cl.: H04W 4/50, H04W 12/40, H04W 4/70

(54) **A METHOD FOR UPDATING A SECURE ELEMENT COOPERATING WITH A TELECOMMUNICATION TERMINAL**
VERFAHREN ZUR AKTUALISIERUNG EINES SICHEREN ELEMENTS, DAS MIT EINEM TELEKOMMUNIKATIONSENDGERÄT ZUSAMMENARBEITET
PROCÉDÉ DE MISE À JOUR D'UN ÉLÉMENT SÉCURISÉ COOPÉRANT AVEC UN TERMINAL DE TÉLÉCOMMUNICATION

(30) Priority: 10.09.2021 EP 21306247
(43) Date of publication of application: 17.07.2024
(73) Proprietor: THALES DIS FRANCE SAS, 92190 Meudon (FR)
(72) Inventor: DEMARTY, Joel, 13600 LA CIOTAT (FR); GATTONE, Alain, 13600 LA CIOTAT (FR); GROS, Jean Francois, 13600 LA CIOTAT (FR)
(74) Representative: Scheer, Luc
(86) International application number: PCT/EP2022/074421
(87) International publication number: WO 2023/036697

(56) References cited:
- EP-A1- 3 334 116
- "Lightweight Machine to Machine Technical Specification", no. 1.0.2, 7 February 2018 (2018-02-07), pages 1 - 144, XP064193871, Retrieved from the Internet <URL:ftp/Public_documents/REQ/2020/> [retrieved on 20200703]

## Description

The present invention relates to the field of telecommunications and more specifically, that of remote administration of security elements, such as UICCs (Universal Integrated Circuit Cards), eUICCs (embedded UICCs), iUICCs (integrated UICCs) interacting with terminals, portable terminals for instance, such as telephones, smartphones, PDAs or computers. The security elements may also be in the form of integrated circuits in machines, such as in the field of M2M (Machine to Machine). They are not necessarily physically connected to the terminal and can however communicate with the latter via a short-haul link in which a security element is remote and communicates via a short-haul channel with the terminal (Bluetooth or Wifi for example). Such administration of security elements is typically performed OTA (Over The Air) in order to update or install data or programs in the security elements. Administration of this kind can use http protocols (HyperText Transfer Protocol) or SMS (Short Message Service).

There are two ways of administering security elements:
The first involves transmitting data or programs from an OTA platform or server to targeted security elements, for example during update campaigns. This type of administration is known as "push" and is based on transmission in SMS mode. The problem with this method is that it is unsuitable in new-generation networks, such as pure LTE networks that do not support SMS (they are fully http). Furthermore, RAM- or RFM-type administrations by http have been set up to avoid unreliable protocols such as SMS.

The second involves querying the OTA platform, for example, regularly or when an event occurs, to find out if there are any updates available. This query is initiated by the security element and is called "polling" or "pull" (the security element sees whether the OTA platform has anything to transmit to it). The query is performed via the http protocol.

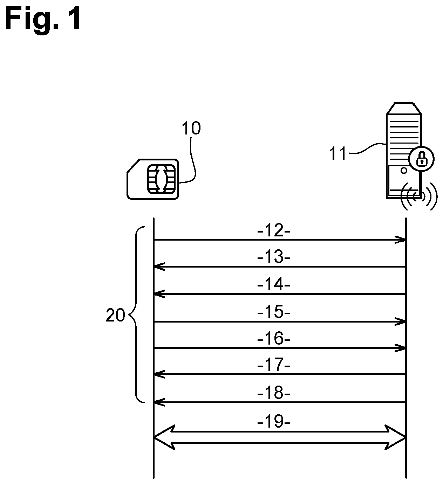

FIG. 1 illustrates a system for administering security elements based on this principle.

In this figure, a security element 10 is administered by an OTA platform 11 or server.

The security element 10 interacts with a telecommunications terminal, not illustrated.

The process begins with a stage 12 involving querying the OTA platform 11, at the initiative of the security element 10, to find out whether the former has data or programs to transmit to the latter. All the exchanges illustrated are carried out according to the SCP 81 protocol.

During a stage 13, the server 11 answers the security element 10 stating that it has received the latter's request and confirms this reception during a stage 14.

During the stage 15, the security element 10 sends a PSK ID to the server 11. A PSK ID refers a pre-established key (PSK) shared between the security element 10 and the server 11, associated with an identity (ID). By means of this PSK key, the server 11 recognises the security element 10.

Advantageously, reference should be made to the IETF recommendation available at the following address: https://tools.ietf.org/html/rfc4279.

During a stage 16, the security element 10 selects a cipher suite, for example an AES 128 or 3DES suite.

The server 11 accepts, during a stage 17, the proposed cipher suite and subsequently, during a stage 18, finalises establishment of the handshake channel with the security element 10.

Stage 19 subsequently involves exchanging data on the secure TLS-PSK channel thus established. In particular, during this stage 19, the security element 10 transmits a URL to the server 11, with this URL corresponding to the reason for its request (simple data update, activation of security element 10 if this is its first use,...).

The problem with this solution lies in the fact that in general, the security element 10 does not wait for an event to occur to query the OTA platform 11. "Polling" is therefore performed regularly, every fifteen days or monthly for example and the majority of the time, the OTA platform 11 does not have anything to transmit to the security element 10... The applicant has noticed for example that in 90% of queries of the OTA platform 11 by the security elements 10 in the field, no updates or programs or data are to be transmitted to the security elements 10. This results in unnecessary wireless traffic and overburdening of the OTA platform (a TLS-PSK link is established between the security element and the OTA platform each time the security element is queried). Stages 12 to 18, usually referenced by 20, are therefore unnecessary most of the time.

Another problem is that the OTA platform 11 is constantly being used for various tasks that do not all have the same degree of urgency. For example, it is more important to initialise a security element 10 (when the subscriber inserts it into a terminal for the first time) so that the subscriber can quickly make calls (download his or her contact directory for example or download a full subscription) rather than update his or her PLMN (Public Land Mobile Network-list of foreign networks to which the security element 10 will preferably connect when roaming).

Consequently, there is no distinction in the processing of requests that are urgent and those that are not. The OTA server 11 may in this case be caused to reject connection requests from security elements 10 that urgently need to be updated if it is overwhelmed by other less urgent requests from other security elements.

EP Patent Application Publication No. EP 3334116 A1 describes a method for optimizing the polling event of a secure element cooperating with a terminal.

Non-Patent Literature entitled "Lightweight Machine to Machine Technical Specification" describes a comprehensive overview of the LwM2M messaging layer, including detailed mapping of the LwM2M messaging layer to selected transports.

In addition, when an internal network of a data center is involved in updating security elements (e.g. a data center of a security element manufacturer with whom the mobile operator has located its services), unnecessary strain will be placed on this network too. Furthermore, when this network uses physically decentralised servers, additional communications will be added.

In order to overcome this disadvantage of the second way of operating, two solutions are possible:
- Extend the period between two OTA platform queries ("polling") (an application in the security element is updated to extend this period). The disadvantage is that if updates are available immediately after the last query, the security element will only be updated much later;
- Switch to "push" mode. The problems mentioned above are encountered again in this case.

It is also known that for M2M applications for example, an LwM2M (Lightweight M2M) protocol can be used.

The LwM2M protocol is a communication protocol designed especially for remote device management and telemetry within the Internet of Things as well as in other M2M applications. Acting as the successor to OMA device management (OMA DM) standard, Lightweight M2M is designed intrinsically to reduce power and data consumption, thus recognising and responding to the demands of the growing M2M market for dedicated solutions for low-power devices with limited processing and storage capabilities (which are also known by the name of resource-constrained devices).

The protocol's specification describes many typical loT device management functions, such as remote device actions, firmware and software updates (FOTA & SOTA), connectivity monitoring and management including cellular management and provisioning.

However, LwM2M protocol is intended for device management and has no impact on the secure element comprised in this device. Administration of the secure element is out of scope of the LwM2M protocol.

The present invention proposes to use the LwM2M protocol to trigger the administration of the secure elements by an OTA server.

The invention is defined by the appended independent claims. Further embodiments are defined by the appended dependent claims.

More precisely, the invention proposes a method for updating a secure element cooperating with a telecommunication terminal in a telecommunication network, the updating being performed by an OTA server, the method comprising:
- Sending from the OTA server to the secure element a trigger of polling message through a LwM2M channel, in order to ask to the secure element to establish a https channel with the OTA server, the OTA server updating the secure element through the https channel after establishment of the https channel.

Preferably, the trigger of polling message comprises a counter incremented by the OTA server at each sending of a trigger of polling message by the OTA server to the secure element.

Advantageously, the trigger of polling message is diversified for each secure element. Preferably, the diversification consists in encrypting the trigger of polling message with the ICCID of the secure element.

The invention also concerns an OTA server having a processor comprising instructions to send to a secure element a trigger of polling message through a LwM2M channel, in order to ask to the secure element to establish a https channel with the OTA server, the OTA server updating the secure element through the https channel after establishment of the https channel.

The invention also concerns a LwM2M server having a processor comprising instructions to send to a secure element a trigger of polling message through a LwM2M channel to a LwM2M client, in order to ask to this secure element to establish a https channel with the OTA server, the OTA server updating the secure element through the https channel after establishment of the https channel.

The invention also concerns a LwM2M client having a processor comprising instructions to receive from a LwM2M server a trigger of polling message through a LwM2M channel to a secure element, in order to ask to this secure element to establish a https channel with the OTA server, the OTA server updating the secure element through the https channel after establishment of the https channel.

The invention also concerns a secure element having a processor comprising instructions to receive from a LwM2M a trigger of polling message through a LwM2M channel to this secure element, in order to ask to this secure element to establish a https channel with the OTA server, the OTA server updating the secure element through the https channel after establishment of the https channel.

Finally, the invention concerns an applet comprised in an OTA platform, a LwM2M server, a LwM2M client and a secure element cooperating with a device, this applet comprising instructions for triggering a polling message through a LwM2M channel to this secure element, in order to ask to this secure element to establish a https channel with the OTA server, the OTA server updating the secure element through the https channel after establishment of the https channel.

Other features and advantages of the present invention will be presented in the following figures that represent:
- Figure 1 the state of the art;
- Figure 2 a preferred embodiment of the present invention;
- Figure 3 an alternative to the solution represented in figure 2.

Figure 1 has been presented in regard of the state of the art.

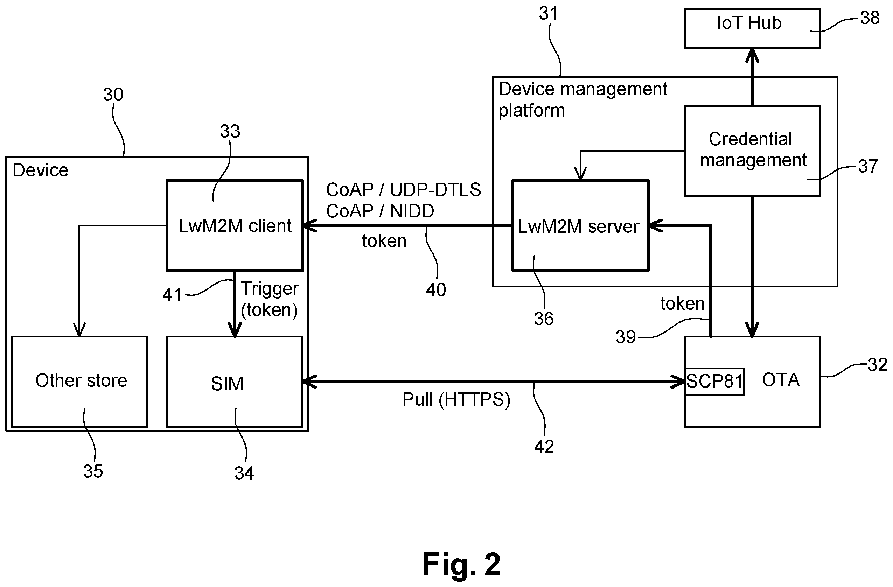

Figure 2 represents a preferred embodiment of the present invention.

In this figure, three main entities are represented: A device 30 that can be a M2M device, a device management platform 31 that administrates the device 30 and an OTA platform (or server) 32 that has the task to administrate a secure element 34 cooperating with the device 30 (download data or applications into the secure element 34).

The device 30 comprises an LwM2M client 33 and the device management platform 31 a LwM2M server 36. The device management platform 31 also comprises a credential management unit 37 linked to the LwM2M server 36, to the OTA platform 32 and to an loT Hub 38.

The credential management unit 37 and the loT Hub 38 are only represented for completeness of understanding, as they are not part of the invention. The credential management unit 37 collects information from the device 30, such as consumption of gas or electricity for example and stores these information in the loT Hub 38. These information are sent by a store 35 located in the device 30 through an application located between the LwM2M client 33 and the store 35, the application being not represented.

The invention works ask follows:
In order to update the secure element 34 cooperating with the telecommunication terminal (or device) 30, the OTA server 32 sends to said secure element 34 a trigger of polling message through the LwM2M channel, in order to ask to the secure element 34 to establish a https channel with the OTA server, the OTA server updating the secure element through the https channel after establishment of the https channel.

For that, the OTA server 32, when it has data to be downloaded to the secure element 34, sends a trigger of polling message 39 (a token) to the LwM2M server 36. The LwM2M server 36 sends this token (step 40) to the LwM2M client 33 that sends it to the secure element 34. The secure element 34 then opens an https channel 42 with the OTA server 32 thanks to SCP81 81 keys comprised in the OTA server 32 and in the secure element 34. When this channel is opened, the OTA server 32 can download data or programs into the secure element 34.

The token 40 is sent by a Constrained Application Protocol (CoAP) that is a specialized Internet Application Protocol for constrained devices, as defined in RFC 7252. CoAP is a service layer protocol that is intended for use in resource-constrained internet devices, such as wireless sensor network nodes.

User datagram protocol (UDP) operates on top of the Internet Protocol (IP) to transmit datagrams over a network.

Non-IP Data Delivery (NIDD) offers efficient communication between loT devices and enterprise applications. NIDD is capable of transporting up to 1500 bytes in a single transmission without the tens of bytes of overhead required by IP, and higher layer protocols such as TCP or UDP. Thus, there is no more need for the secure element 34 to trigger the OTA server 32 regularly, since the OTA server 32 informs the secure element 34, over a LwM2M channel that it has to establish an https channel with this OTA platform 32. And this channel is opened thanks to the LwM2M channel trigger, so that there is no (at least limited) power consumption from the device 30 and only required OTA operations are done, at the initiative of the OTA platform 32.

The secure element 34 establishes the https channel with the OTA platform 32.

Preferably, the trigger of polling message 39 comprises a counter incremented by the OTA server 32 at each sending of a trigger of polling message by the OTA server 32 to the secure element 34. This secures the communications between these two elements because the secure element 32 cannot always trust the LwM2M client 33 and prevents DOS attacks.

So, the token 40 can be secured against DOS attacks in order that the secure element 34 regognizes it. It can be a symmetrical key, like a counter (the token is tokenized).

In a preferred embodiment, the trigger of polling message is diversified for each secure element. This insures that each poling message is addressed to a targeted secure element 34. This diversification can be done by encrypting the trigger of the polling message with a unique identifier of the secure element, for example the ICCID of the secure element 34 (it requires only a unique ID of the secure element 34). The secure element 34 can then decrypt the received polling message and establish the https session in pull mode.

So, the invention relies on a network (OTA) initiated pull for the secure element 34.

The token 39 is sent and received by the LwM2M client 33 that recognizes that this token is intended to the secure element 34.

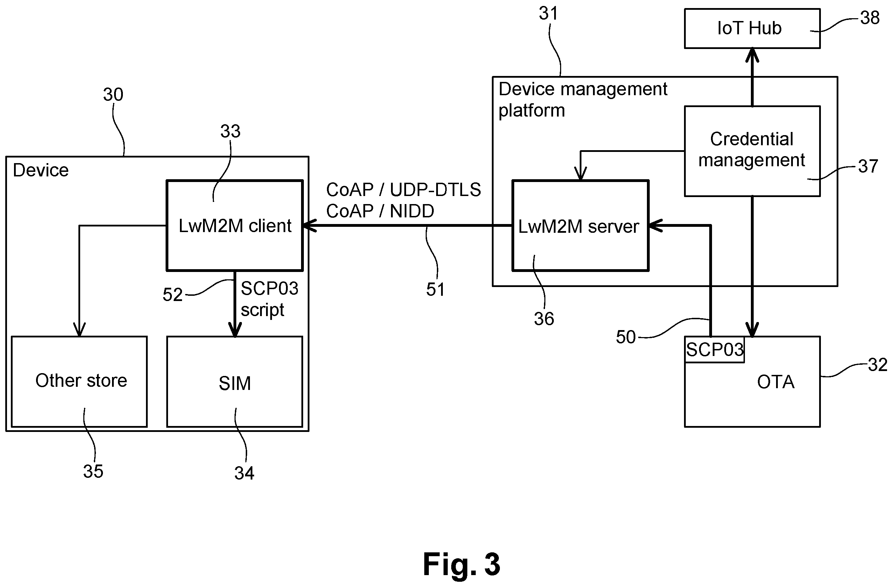

In another embodiment represented in figure 3, the OTA platform 32, instead of sending a polling message to the secure element 34, sends an encrypted message (with SCP03 keys) 50 to the secure element 34, through the LwM2M channel. This is an update script.

This encrypted message (51, 52) is forwarded to the secure element 34 and contains the updates for the secure element 34, encrypted by SCP03 keys. This establishes a secure channel between the OTA platform 32 and the secure element 34. The https channel 42 of figure 2 does not exist anymore.

It is also possible to use SCP 11 or SCP 04 keys instead of SCP 03 keys.

In this embodiment, it is possible to use any way of communication between the OTA platform 32 and the secure element 34 (SMS, https, LwM2M protocols,...) to update the secure element 34 since the script contains the data to be transmitted to the secure element 34 by the OTA platform 32. The script to be downloaded to the secure element are sent through the LwM2M channel but as they are encrypted by SCP03 keys, only the secure element 34 will be able to decrypt the script. So, there is no need to establish a dedicated https channel between the OTA platform and the secure element (like shown in figure 2, referenced 42).

The invention also concerns an OTA server 32 having a processor comprising instructions to send to a secure element 34 a trigger of polling message through a LwM2M channel, in order to ask to this secure element 34 to establish a https channel with the OTA server 32, the OTA server 32 updating the secure element 34 through the https channel after establishment of the https channel.

The invention also concerns a LwM2M server 36 having a processor comprising instructions to send to a secure element 34 a trigger of polling message through a LwM2M channel to a LwM2M client 33, in order to ask to this secure element 34 to establish a https channel with the OTA server 32, the OTA server 32 updating the secure element 34 through the https channel after establishment of the https channel.

The invention also concerns a LwM2M client having a processor comprising instructions to receive from a LwM2M server a trigger of polling message through a LwM2M channel to a secure element 34, in order to ask to this secure element 34 to establish a https channel with the OTA server 32, the OTA server 32 updating the secure element 34 through the https channel after establishment of the https channel.

The invention also concerns a secure element having a processor comprising instructions to receive from a LwM2M a trigger of polling message through a LwM2M channel to this secure element 34, in order to ask to this secure element 34 to establish a https channel with the OTA server 32, the OTA server 32 updating the secure element 34 through the https channel after establishment of the https channel.

Finally, the invention concerns an applet comprised in an OTA platform 32, a LwM2M server 36, a LwM2M client 33 and a secure element 34 cooperating with a device 30, this applet comprising instructions for triggering a polling message through a LwM2M channel to this secure element 34, in order to ask to this secure element 34 to establish a https channel with the OTA server 32, the OTA server 32 updating the secure element 34 through the https channel after establishment of the https channel.

The invention can be implemented in all LPWAN networks (Low Power Wireless Access network) like SigFox^{™} Lora^{™} or NB-loT for example. It improves the OTA service for secure elements without needing excessive power consumption and bandwidth.

## Claims

1. A method for updating a secure element (34) cooperating with a telecommunication terminal (30) in a telecommunication network, said updating being performed by an Over The Air, OTA, server (32), said method comprising:
- Sending from said OTA server (32) to said secure element (34) a trigger of polling message through a Lightweight M2M, LwM2M, channel when said OTA server has data to be downloaded to the secure element (34), wherein the trigger of polling message is sent in order to ask to said secure element (34) to establish a https channel with said OTA server (32), said OTA server (32) updating said secure element (34) through said https channel after establishment of said https channel.

2. A method according to claim 1, wherein said trigger of polling message comprises a counter incremented by said OTA server (32) at each sending of a trigger of polling message by said OTA server (32) to said secure element (34).

3. A method according to claims 1 or 2, wherein said trigger of polling message is diversified for each secure element (34).

4. A method according to claim 3, wherein said diversification consists in encrypting said trigger of polling message with the ICCID of said secure element (34).

5. An OTA server (32) having a processor comprising instructions to send to a secure element (34) a trigger of polling message through a LwM2M channel when said OTA server has data to be downloaded to the secure element (34), wherein the trigger of polling message is sent in order to ask to said secure element (34) to establish a https channel with said OTA server (32), said OTA server (32) updating said secure element (34) through said https channel after establishment of said https channel.

6. A LwM2M server (36) having a processor comprising instructions to send to a secure element (34) a trigger of polling message through a LwM2M channel to a LwM2M client (33) when an OTA server has data to be downloaded to the secure element (34), wherein the trigger of polling message is sent in order to ask to this secure element (34) to establish a https channel with said OTA server (32), said OTA server (32) updating said secure element (34) through said https channel after establishment of said https channel.

7. A LwM2M client (33) having a processor comprising instructions to receive from a LwM2M server (36) a trigger of polling message through a LwM2M channel to a secure element (34) when an OTA server has data to be downloaded to the secure element (34), wherein the trigger of polling message is received in order to ask to this secure element (34) to establish a https channel with said OTA server (32), said OTA server (32) updating said secure element (34) through said https channel after establishment of said https channel.

8. A secure element (34) having a processor comprising instructions to receive from a LwM2M a trigger of polling message through a LwM2M channel to this secure element (34) when an OTA server has data to be downloaded to the secure element (34), wherein the trigger of polling message is received in order to ask to this secure element (34) to establish a https channel with said OTA server (32), said OTA server (32) updating said secure element (34) through said https channel after establishment of said https channel.

9. An applet comprised in an OTA platform (32), a LwM2M server (36), a LwM2M client (33) and a secure element (34) cooperating with a device (30), this applet comprising instructions for triggering a polling message through a LwM2M channel to this secure element (34) when an OTA server has data to be downloaded to the secure element (34), wherein triggering the polling message is performed in order to ask to said secure element (34) to establish a https channel with said OTA server (32), said OTA server (32) updating said secure element (34) through said https channel after establishment of said https channel.

## Patentansprüche

1. Verfahren zum Aktualisieren eines sicheren Elements (34), das mit einem Telekommunikationsendgerät (30) in einem Telekommunikationsnetz zusammenarbeitet, wobei das Aktualisieren durch einen Over-The-Air-Server, OTA-Server, (32) durchgeführt wird, das Verfahren umfassend:
- Senden, von dem OTA-Server (32) an das sichere Element (34), einer Abfrageauslösenachricht über einen Lightweight-M2M-Kanal, LwM2M-Kanal, wenn der OTA-Server Daten aufweist, die auf das sichere Element (34) heruntergeladen werden sollen, wobei die Abfrageauslösenachricht gesendet wird, um das sichere Element (34) aufzufordern, einen https-Kanal mit dem OTA-Server (32) einzurichten, wobei der OTA-Server (32) das sichere Element (34) nach der Einrichtung des https-Kanals über den https-Kanal aktualisiert.

2. Verfahren nach Anspruch 1, wobei die Abfrageauslösenachricht einen Zähler umfasst, der durch den OTA-Server (32) bei jedem Senden einer Abfrageauslösenachricht durch den OTA-Server (32) an das sichere Element (34) inkrementiert wird.

3. Verfahren nach Anspruch 1 oder 2, wobei die Abfrageauslösenachricht für jedes sichere Element (34) diversifiziert wird.

4. Verfahren nach Anspruch 3, wobei die Diversifizierung darin besteht, die Abfrageauslösenachricht mit der ICCID des sicheren Elements (34) zu verschlüsseln.

5. OTA-Server (32), der einen Prozessor aufweist, umfassend Anweisungen, um an ein sicheres Element (34) eine Abfrageauslösenachricht über einen LwM2M-Kanal zu senden, wenn der OTA-Server Daten aufweist, die auf das sichere Element (34) heruntergeladen werden sollen, wobei die Abfrageauslösenachricht gesendet wird, um das sichere Element (34) aufzufordern, einen https-Kanal mit dem OTA-Server (32) einzurichten, wobei der OTA-Server (32) das sichere Element (34) nach der Einrichtung des https-Kanals über den https-Kanal aktualisiert.

6. LwM2M-Server (36), der einen Prozessor aufweist, umfassend Anweisungen, um an ein sicheres Element (34) eine Abfrageauslösenachricht über einen LwM2M-Kanal an einen LwM2M-Client (33) zu senden, wenn ein OTA-Server Daten aufweist, die auf das sichere Element (34) heruntergeladen werden sollen, wobei die Abfrageauslösenachricht gesendet wird, um dieses sichere Element (34) aufzufordern, einen https-Kanal mit dem OTA-Server (32) einzurichten, wobei der OTA-Server (32) das sichere Element (34) nach der Einrichtung des https-Kanals über den https-Kanal aktualisiert.

7. LwM2M-Client (33), der einen Prozessor aufweist, umfassend Anweisungen, um von einem LwM2M-Server (36) eine Abfrageauslösenachricht über einen LwM2M-Kanal an ein sicheres Element (34) zu empfangen, wenn ein OTA-Server Daten aufweist, die auf das sichere Element (34) heruntergeladen werden sollen, wobei die Abfrageauslösenachricht empfangen wird, um dieses sichere Element (34) aufzufordern, einen https-Kanal mit dem OTA-Server (32) einzurichten, wobei der OTA-Server (32) das sichere Element (34) nach der Einrichtung des https-Kanals über den https-Kanal aktualisiert.

8. Sicheres Element (34), das einen Prozessor aufweist, umfassend Anweisungen, um von einem LwM2M eine Abfrageauslösenachricht über einen LwM2M-Kanal an dieses sichere Element (34) zu empfangen, wenn ein OTA-Server Daten aufweist, die auf das sichere Element (34) heruntergeladen werden sollen, wobei die Abfrageauslösenachricht empfangen wird, um dieses sichere Element (34) aufzufordern, einen https-Kanal mit dem OTA-Server (32) einzurichten, wobei der OTA-Server (32) das sichere Element (34) nach der Einrichtung des https-Kanals über den https-Kanal aktualisiert.

9. Applet, das in einer OTA-Plattform (32), einem LwM2M-Server (36), einem LwM2M-Client (33) und einem sicheren Element (34) umfasst ist, das mit einer Vorrichtung (30) zusammenarbeitet, dieses Applet umfassend Anweisungen zum Auslösen einer Abfragenachricht über einen LwM2M-Kanal an dieses sichere Element (34), wenn ein OTA-Server Daten aufweist, die auf das sichere Element (34) heruntergeladen werden sollen, wobei das Auslösen der Abfragenachricht durchgeführt wird, um das sichere Element (34) aufzufordern, einen https-Kanal mit dem OTA-Server (32) einzurichten, wobei der OTA-Server (32) das sichere Element (34) nach der Einrichtung des https-Kanals über den https-Kanal aktualisiert.

## Revendications

1. Procédé de mise à jour d'un élément sécurisé (34) coopérant avec un terminal de télécommunication (30) dans un réseau de télécommunication, ladite mise à jour étant effectuée par un serveur par liaison radio, OTA, (32), ledit procédé comprenant :
- l'envoi depuis ledit serveur OTA (32) vers ledit élément sécurisé (34) d'un déclencheur de message d'interrogation par l'intermédiaire d'un canal M2M léger, LwM2M, lorsque ledit serveur OTA a des données à télécharger vers l'élément sécurisé (34), dans lequel le déclencheur du message d'interrogation est envoyé afin de demander audit élément sécurisé (34) d'établir un canal https avec ledit serveur OTA (32), ledit serveur OTA (32) mettant à jour ledit élément sécurisé (34) par l'intermédiaire dudit canal https après l'établissement dudit canal https.

2. Procédé selon la revendication 1, dans lequel ledit déclencheur de message d'interrogation comprend un compteur incrémenté par ledit serveur OTA (32) à chaque envoi d'un déclencheur de message d'interrogation par ledit serveur OTA (32) audit élément sécurisé (34).

3. Procédé selon les revendications 1 ou 2, dans lequel ledit déclencheur de message d'interrogation est diversifié pour chaque élément sécurisé (34).

4. Procédé selon la revendication 3, dans lequel ladite diversification consiste à chiffrer ledit déclencheur de message d'interrogation avec l'ICCID dudit élément sécurisé (34).

5. Serveur OTA (32) doté d'un processeur comprenant des instructions pour envoyer à un élément sécurisé (34) un déclencheur de message d'interrogation par l'intermédiaire d'un canal LwM2M lorsque ledit serveur OTA a des données à télécharger vers l'élément sécurisé (34), dans lequel le déclencheur de message d'interrogation est envoyé afin de demander audit élément sécurisé (34) d'établir un canal https avec ledit serveur OTA (32), ledit serveur OTA (32) mettant à jour ledit élément sécurisé (34) par l'intermédiaire dudit canal https après l'établissement dudit canal https.

6. Serveur LwM2M (36) doté d'un processeur comprenant des instructions pour envoyer à un élément sécurisé (34) un déclencheur de message d'interrogation par l'intermédiaire d'un canal LwM2M vers un client LwM2M (33) lorsqu'un serveur OTA a des données à télécharger vers l'élément sécurisé (34), dans lequel le déclencheur de message d'interrogation est envoyé afin de demander à cet élément sécurisé (34) d'établir un canal https avec ledit serveur OTA (32), ledit serveur OTA (32) mettant à jour ledit élément sécurisé (34) par l'intermédiaire dudit canal https après l'établissement dudit canal https.

7. Client LwM2M (33) doté d'un processeur comprenant des instructions pour recevoir, de la part d'un serveur LwM2M (36), un déclencheur de message d'interrogation par l'intermédiaire d'un canal LwM2M vers un élément sécurisé (34) lorsqu'un serveur OTA a des données à télécharger vers l'élément sécurisé (34), dans lequel le déclencheur de message d'interrogation est reçu afin de demander à cet élément sécurisé (34) d'établir un canal https avec ledit serveur OTA (32), ledit serveur OTA (32) mettant à jour ledit élément sécurisé (34) par l'intermédiaire dudit canal https après l'établissement dudit canal https.

8. Élément sécurisé (34) doté d'un processeur comprenant des instructions pour recevoir, de la part d'un LwM2M, un déclencheur de message d'interrogation par l'intermédiaire d'un canal LwM2M vers cet élément sécurisé (34) lorsqu'un serveur OTA a des données à télécharger vers l'élément sécurisé (34), dans lequel le déclencheur de message d'interrogation est reçu afin de demander à cet élément sécurisé (34) d'établir un canal https avec ledit serveur OTA (32), ledit serveur OTA (32) mettant à jour ledit élément sécurisé (34) par l'intermédiaire dudit canal https après l'établissement dudit canal https.

9. Appliquette comprise dans une plate-forme OTA (32), un serveur LwM2M (36), un client LwM2M (33) et un élément sécurisé (34) coopérant avec un dispositif (30), ladite appliquette comprenant des instructions pour déclencher un message d'interrogation par l'intermédiaire d'un canal LwM2M vers cet élément sécurisé (34) lorsqu'un serveur OTA a des données à télécharger vers l'élément sécurisé (34), dans laquelle le déclenchement du message d'interrogation est effectué afin de demander audit élément sécurisé (34) d'établir un canal https avec ledit serveur OTA (32), ledit serveur OTA (32) mettant à jour ledit élément sécurisé (34) par l'intermédiaire dudit canal https après l'établissement dudit canal https.
